Europäisches Patentamt

European Patent Office

Office européen des brevets

(19)

(11) Numéro de publication: **0 307 312 B1**

(12) **FASCICULE DE BREVET EUROPEEN**

(45) Date de publication du fascicule du brevet: **09.01.91**

(51) Int. Cl.⁵: **B 64 G 1/40**

(21) Numéro de dépôt: **88402260.9**

(22) Date de dépôt: **08.09.88**

(54) **Procédé et système de suivi de la consommation en combustible d'un véhicule spatial.**

(30) Priorité: **11.09.87 FR 8712631**

(43) Date de publication de la demande:
**15.03.89 Bulletin 89/11**

(45) Mention de la délivrance du brevet:
**09.01.91 Bulletin 91/02**

(84) Etats contractants désignés:
**DE GB IT NL**

(56) Documents cités:
**WO-A-87/00816**
**US-A-4 609 169**

(73) Titulaire: **AEROSPATIALE Société Nationale Industrielle**
**37, Boulevard de Montmorency**
**F-75781 Paris Cédex 16 (FR)**

(72) Inventeur: **Perdu, Michel**
**Les Bastides No. 7 Les Adrets de L'Esterel**
**F-83600 Frejus (FR)**

(74) Mandataire: **Rinuy, Santarelli**
**14, avenue de la Grande Armée**
**F-75017 Paris (FR)**

Courier Press, Leamington Spa, England.

EP 0 307 312 B1

## Description

L'invention concerne le suivi en continu de la consommation en combustible d'un véhicule spatial équipé d'une pluralité de propulseurs en vue, notamment, de la reconnaissance de la proximité de la fin de vie de ce véhicule avec une masse résiduelle suffisante pour éjecter le véhicule hors de son orbite de service.

Il est devenu en effet essentiel de procéder à de telles éjections en fin de service pour éviter une saturation des orbites géostationnaires.

Compte tenu du souhait de procéder à une telle éjection le plus tard possible, avec toutefois une marge suffisante de sécurité pour être sûr qu'une telle éjection reste possible, le besoin se fait de plus en plus sentir d'un procédé et d'un système de suivi de consommation de haute précision.

En effect la prévision de fin de vie de véhicules spatiaux (satellites automatiques ou habités), se fait à l'heure actuelle avec une grande imprécision qui conduit à engager les manoeuvres de déorbitation (retour sur terre de véhicules habités ou de satellites automatiques en orbite basse, mise sur orbite non encombrée de satellites géostationnaires), avec des marges de sécurité préjuduciables à la durée de vie utile du système concerné.

Les techniques utilisées jusqu'à ce jour peuvent se regrouper en trois grandes catégories:

a—Méthode thermodynamique:

Pour les réservoirs à volume constant utilisant un gaz de pressurisation (par exemple l'hélium), et connaissant la masse d'hélium embarquée, il est possible de calculer le volume de carburant présent dans chacun des réservoirs de carburant sur la base des mesures de pression et de température dans le réservoir d'hélium et dans chacun des réservoirs de carburant en se basant sur les équations de la thermodynamique.

La précision n'est pas très bonne, principalement à cause des données physico-chimiques peu sûres: solubilité de l'hélium dans le carburant, densité du carburant, pression de vapeur saturante des carburants, volume exact des réservoirs, etc.

Le même problème se pose pour les réservoirs à soufflet (de moins en moins utilisés), bien que les erreurs dûes aux mélanges d'hélium et de carburant soient éliminées.

b—Méthode de comptage:

Sur certains satellites, des informations relatives aux cycles d'ouverture et de fermeture des vannes des propulseurs de contrôle d'attitude et d'orbite sont télémétrées et on en déduit de manière grossière la masse de carburant utilisée, sur la base de données d'impulsion spécifique moyenne, de poussée moyenne et de temps d'ouverture.

Ni le contenu des informations télémétrées, ni les algorithmes de calcul n'ont été optimisés jusqu'ici en fonction de l'établissement d'un budget de carburant, mais plutôt en fonction d'actions de surveillance (estimation de couples perturbateurs, recherche de pannes, etc...): il n'existe aujourd'hui aucune expression du besoin de précision du budget de carburant utilisé dans le spécifications fonctionnelles au niveau système.

c—Mesures directes de niveau, de volumes ou de débits:

Les solutions connues ayant trait au sujet décrivent tous des instruments de mesure directe de niveau de liquide, volumes de liquides ou de gaz, débits de liquides ou de gaz.

Pour une application spatiale, seules les mesures de volume et de débit sont à retenir: tous les dispositifs connus sont:

—entièrement consacrés à la mesure correspondante d'où surplus de poids direct (instruments) et de poids annexe (câbles, mise à disposition de puissance électrique, etc...).

—d'une utilisation très hypothétique, puisque faisant appel à des techniques complexes dont la qualification pour l'espace reste à obtenir.

On connaît également, de par le document FR—2.414.721 un appareil pour la mesure de faibels débits pondéraux de liquide, fondé sur la mesure d'une poussée d'Archimède.

L'invention vise un procédé, et un système adapté à sa mise en oeuvre, adapté à effectuer le suivi de la consommation en combustible d'un véhicule spatial de manière précise et simple, dans nécessiter le transfert au sol d'un grand nombre de données, ni de rajouter un volume et un poids importants d'éléments spécifiques embarqués.

L'invention propose ainsi un procédé de suivi en continu de la consommation en combustible d'un véhicule spatial équipé d'une pluralité de propulseurs dont la mise en oeuvre est provoquée par des moyens d'activation en fonction d'ordres d'acitvation qui leur sont appliqués, caractérisé en ce que l'on mémorise, à partir d'un instant de référence, le nombre N d'ordres d'activation appliqués caractérisé en ce que l'on mémorise, à partir d'un instant de référence, le nombre N d'ordres d'activation appliqués à chacun des propulseurs ainsi que leur durée cumulée S et on en déduit la masse M de combustible consommée depuis l'instant de référence par chaque propulseur par une formule du type:

$$M = f(N) + g(S)$$

où f et g sont des fonctions prédéterminées indépendantes, et on fait la somme des masses consommées par chaque propulseur.

Selon des dispositions préférées:
—on calcule la masse M par la formule

$$M = \dot{m} \times S + m_o \times N$$

où $\dot{m}$ est un débit moyen de combustible en phase d'activation d'un propulseur donné et $m_o$ est une masse forfaitaire prédéterminée;
—on définit une succession périodique d'instants de référence et on mémorise à chaque instant de référence pour chaque propulseur le nombre et la durée cumulée des ordres d'activation intervenus depuis l'instant précédent de référence, on calcule la masse de combustible consommée depuis l'instant de référence et on ajoute les masses ainsi calculées successivement;

—on transmet au sol le nombre et la durée cumulée des ordres d'activation et on détermine au sol les masses de combustible consommé;

—on détermine à bord la masse de combustible consommée par les propulseurs et on la transmet au sol.

L'invention propose également un système de suivi de la consommation en combustible d'un véhicule spatial, adapté à la mise en oeuvre du procédé précité, ce véhicule étant équipé d'une pluralité de propulseurs dont la mise en oeuvre est provoquée par des moyens d'activation en fonction d'ordres d'activation qui leur sont appliqués par une unité de commande, caractérisé en ce que cette unité de commande comporte une unité logique dotée d'une zone de mémoire adaptée à stocker le nombre et la durée cumulée d'ordres d'activation à partir d'instants de référence, un étage de puissance adapté à appliquer les signaux d'activation aux moyens d'activation en fonction de signaux logiques émis par l'unité logique, et une unité adaptée à échantillonner le contenu de la zone de mémoire à chaque instant de référence et à télémétrer au sol un signal représentatif de ce contenu.

Selon des dispositions préférées:

—les moyens d'activation sont des vannes électromagnétiques associées chacune à un propulseur;

—les moyens d'activation comportent une vanne pneumatique contrôlant l'alimentation en combustible d'un propulseur et une vanne électromagnétique, commandée par l'étage de puissance, pour commander l'alimentation en fluide de la vanne pneumatique;

—aux propulseurs sont associés des capteurs de pression et/ou de température connectés à l'unité logique;

L'équipement minimal nécessaire à la mise en oeuvre de l'invention est ainsi celui qui assure les fonctions suivantes:

a) acquisition du temps total d'ouvertures des propulseurs pendant une période T;

b) acquisition de nombre total d'ouvertures des propulseurs effectuées pendant la période T;

c) stockage de ces données et communication au sol au bout de la période T;

d) support physique pour l'algorithme de calcul;

e) réception et stockage des données.

Généralement, les fonctions c), d), et e) peuvent être assurées par du matériel déjà présent à bord de satellite ou au sol, et nécessitent seulement la prise en compte des besoins correspondants lors de la spécification de ce matériel dans un cadre plus global.

Les fonctions a) et b) doivent être spécifiées de manière explicite lors de la conception du satellite.

Ainsi qu'on le sait les performances en mode pulsé d'un propulseur quelconque sont caractérisables par deux grandeurs mesurables:

—l'incrément d'impulsion ("impulse-bit IB")

—l'impulsion spécifique ("specific impulse IS") données en fonction de la durée moyenne d'ouverture électrique TO et de la durée de fermeture électrique TF (depuis la dernière impulsion) des vannes du propulseur.

Les deux grandeurs sont généralement mesurées séparément et on en déduit, suivant le rapporteur des tests, soit des abaques, des fonctions numériques, soit des tableaux pour chacune des variables:

—IB=F1 (TO, TF)

—IS=F2 (TO, TF), les mesures ayant été effectuées pour une pression amont donnée, et pour une température de carburant donnée.

En divisant IB par IS, on obtient très exactement la consommation de carburant pour une implusion donnée (en fonction de TO, TF) et il serait donc facile de faire un budget de carburant connaissant TO et TF pour toute la durée de vie du satellite.

La quantité d'information nécessaire pour définir exactement TO et TF est très grande et il n'est donc jamais envisagé de la transmettre au sol au moins pour des raisons d'encombrement de format de télémètrie.

Par contre l'algorithme inventé n'a besoin que des deux données:

1) somme des durées d'ouverture pendant une période donnée (un compteur par propulseur);

2) nombre total de plulses pendant la même période (un compteur par propulseur).

Pour que ces données suffisent, la fonction $\Delta m = F(TO, TF)$ a été simplifiée de manière suivante:

$$-\Delta m = (\dot{m} \times TO) + m_o$$

avec

—$\dot{m}$ =débit moyen de carburant

—$m_o$=masse forfaitaire de carburant consommée à chaque pulse

ce qui revient à dire physiquement que la variation de $\Delta m$ dûe à la durée de fermeture n'est dûe en réalité qu'à l'évaporation rapide dans l'espace d'une masse forfaitaire de carburant injectée dans les circuits en aval de la vanne du propulseur à chaque impulsion, et non utilisée pour la propulsion;

—le calcul de $\dot{m}$ et de $m_o$ à partir des valeurs $\Delta m = F(TO, TF)$ se fait en choisissant $\dot{m}$ de manière à minimiser l'écart-type de la valeur $m_o$ obtenue par traitement statistique de la fonction $m_o = F(\dot{m}, TO, TF)$;

—TO, TF et $\dot{m}$ étant connus avec une grande précision, l'erreur de méthode est dûe à l'écart-type de $m_o$. Le budget de carburant utilisé se fait de la manière suivante:

$$M=[\dot{m}\times(\Sigma TO)+m_o\times N]$$

avec

$\Sigma TO$=somme des durées d'ouverture

$N$=nombre total de impulsions

La précision sur le budget de carburant se trouve améliorée par la présence d'équipements secondaires suivants:

—un ou plusieurs capteurs de pression, suivant le nombre de réservoirs et la complexité du système de propulsion, et donnant soit la pression dans les réservoirs soit la pression dans le carburant en amont de la (des) vanne(s) du (des) propulseur(s).

— des algorithmes de calcul classiques reliant les données IB et IS aux pressions mesurées.

—un ou plusieurs capteurs de température, suivant le nombre de réservoirs et la complexité du système de propulsion, et donnant soit la température dans les réservoirs soit la température du carburant en amont de la (des) vanne(s) du (des) propulseur(s).

—des algorithmes de calcul (classiques) reliant les données IB et IS aux températures mesurées.

De manière générale l'invention s'applique à:

—des systèmes de propulsion à gaz ou à liquide:

—des systèmes de pressurisation quelconque, où le débit est commandé par une vanne dont on peut mesurer les durées d'ouverture et de fermeture.

Des objets, caractéristiques et avantages de l'invention ressortent de la description qui suit, donnée à titre d'exemple non limtatif, en regard des dessins annexés sur lesquels:

—la figure 1 est une vue schématique d'un satellite équipé d'un système de suivi de consommation conforme à l'invention;

—la figure 2 est une vue schématique partielle d'une premiére variante;

—la figure 3 est une vue schématique partielle d'une seconde variante; et

—la figure 4 est une vue schématique partielle d'une troisième variante.

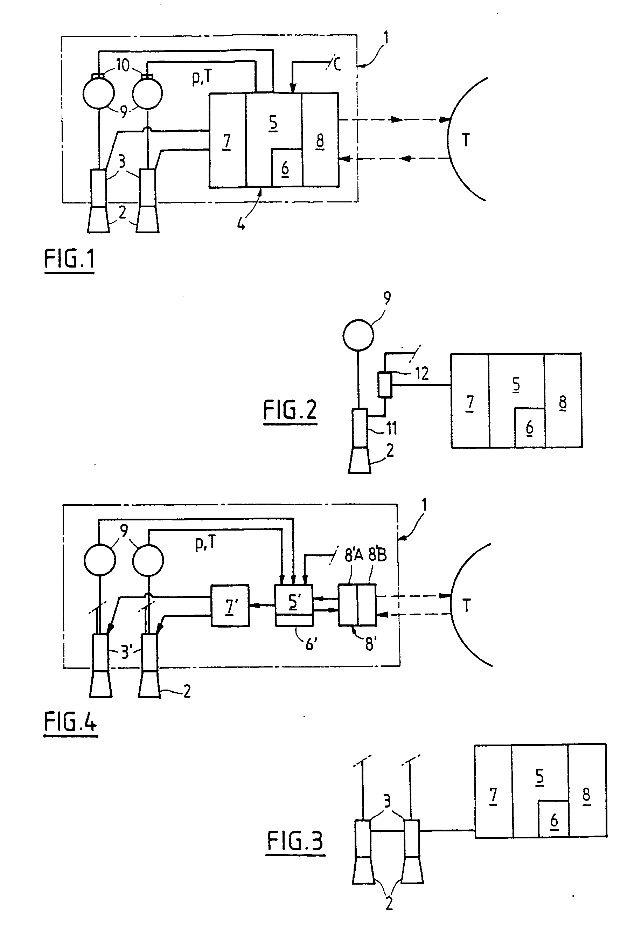

La figure 1 représente de manière schématique, au sein d'un satellite 1 équipé de propulseurs 2, les éléments essentiels intervenant dans la mise en oeuvre de l'invention.

Ces propulseurs 2 sont dotés chacun de moyens d'activation, schématisés en 3, recevant des ordres d'activation en provenance d'une unité de commande 4, ici commune aux divers propulseurs.

Cette unité de commande comporte une unité logique 5, une zone de mémoire 5, un étage de puissance 7 et une unité de télémétrie 8 adaptée à échanger des informations avec la terre T. Des moyens de réception et de traitement, non représentés, sont prévus au sol.

Les unités 5, 6 et 8 (voire 5 à 8) font par exemple partie d'un ordinateur de bord.

Les éléments constitifs de cette unité de commande sont de tout type connu approprié, l'invention portant sur la combinaison qui en est faite et sur les modalités de cette combinaison.

L'unité logique 5 transmet des signaux logiques (faible courant, faible tension—par exemple 5V) à l'étage de puissance 7 qui en dérive des signaux de commande ou d'activation (courant moyen, tension moyenne—par exemple 26V) pour au moins un des propulseurs 2.

A cette unité logique 5 sont par ailleurs appliquées des informations de commande C, au travers éventuellement d'un élément d'interface non représenté. Ces informations C constituent par exemple la sortie d'une boucle d'asservissement, telle qu'une boucle de pilotage/guidage du véhicule spatial 1 autour d'un de ses axes de rotation; ces informations peuvent également comprendre des impulsions de vitesse semi-automatiques.

C'est à partir de ces informations C et/ou d'ordres provenant du sol au travers de l'unité 8, que l'unité logique 5 élabore les ordres logiques précités, représentant des cycles de commande électrique d'ouverture/fermeture d'un ou plusieurs propulseur(s) 2.

A partir des signaux logiques, l'unité détermine le nombre N de cycles (ou ordres d'activation) d'ouverture/fermeture de chaque propulseur à partir d'un instant de référence ainsi que la somme S des temps d'ouverture ou d'activation de ce propulseur à partir du même instant. Ces grandeurs N et S sont stockées dans la zone de mémoire 6.

Cette zone de mémoire est lue par l'unité de télémétrie 8 et les valeurs ainsi relevées sont transmises au sol par cette dernière, suivant un formant propre au véhicule spatial 1.

De manière préférée une succession périodique d'instants de référence est définie et, en chacun de ces instants, les valeurs stockées dans la zone de mémoire 6 sont relevées et transmises au sol par l'unité 8 avant remise à zéro de ladite zone. Les grandeurs N et S sont ainsi échantillonnées à la fréquence des instants de référence.

Dans l'exemple de la figure 1 les moyens d'activation 3 sont des vannes, de type électromagnétique de préférence, qui déterminent le débit de combustible (combustible/carburant) en provenance de réservoirs 9 contenant un fluide de propulsion.

De manière préférée, à ces réservoirs sont associés des capteurs 10 adaptés à transmettre à l'unité logique des informations de pression et/ou de température relatives au volume interne de ces réservoirs.

Dans la variante de la figure 2 les moyens d'activation associés à un propulseur se décomposent en une vanne pneumatique 11 commandant l'arrivée de fluide de propulsion au propulseur 2 et en une vanne intermédiaire 12, de type électromagnétique, contrôlant, sous l'action de signaux émis par l'étage de puissance 7, l'arrivée à la vanne 11 d'un fluide de pressurisation en provenance d'un réservoir non représenté.

Au cas où la retransmission au sol ne peut pas se faire pendant un certain temps, les valeurs successives de N et S sont stockées dans la zone de mémoire 6 sur plusieurs périodes et sont retransmises au sol dès que les conditions de transmission redeviennent satisfaisantes.

L'unité de télémétrie peut échantillonner les valeurs de N et S stockées en 6, soit sous forme numérique, soit sous forme analogique.

Dans la variante de la figure 3 les signaux d'activation sont appliqués simultanément à plusieurs propulseurs par l'intermédiaire de moyens d'activation synchronisés. En variante non représentée ces signaux sont appliqués successivement à plusieurs propulseurs.

En variante non représentée le fluide de propulsion est confiné en une pluralité de réservoirs et son échappement vers le propulseur associé est commandé par plusieurs vannes synchronisées.

Il en est de même lorsque deux fluides (carburant/comburant) doivent s'échapper vers un même propulseur.

La masse de combustible consommée entre deux instants de référence en un propulseur est calculée au sol par application d'une formule du type

$$M = f(N) + g(S)$$

f et g étant fonction prédéterminées indépendantes.

De manière préférée la fonction $f(N) = m_o \times N$, ou $m_o$ est une masse forfaitaire prédéterminée correspondant à la consommation d'un propulseur qui est mis à feu puis aussitôt étient, pour une durée nulle de propulsion.

Quant à la fonction S elle est de préférence prise égale à $g(S) = \dot{m} \times S$, où $\dot{m}$ est le débit moyen de combustible au travers d'un propulseur maintenu activé.

En variante, ce calcul de la masse de combustible consommée entre deux instants de référence successifs est effectué à bord par un microprocesseur associé à l'unité 5 ou dont cette dernière ferait partie, et c'est le résultat de ces calculs successifs, stocké dans la zone 6, qui est transmis au sol par l'unité 8.

Le cas échéant, soit les valeurs de N et S, soit la valeur de M est transmise au sol, selon les besoins ou les possibilités.

On déduit la masse totale de combustible consommé par sommation des valeurs de M calculées pour les divers intervalles de temps et/ou pour les divers propulseurs.

La figure 4 illustre un exemple de réalisation particulièrement simple de l'unité de commande 4. Celle-ci comporte des unités séparées, la mémoire 6' étant associée à l'unité logique 5', et l'unité de télémétrie 8' étant décomposée en un étage d'échantillonnage 8'A et un étage de télémétrie proprement dite 8'B.

Dans cet exemple les moyens d'activation 3' assurent l'alimentation de deux propulseurs en deux fluides complémentaires de propulsion (carburant/comburant).

En variante ces éléments ne contrôlent qu'un seul propulseur.

Le calcul en continu de la consommation de combustible permet de prévoir la fin de vie du satellite avec une précision dépendant de la précision avec laquelle on connaît la masse de départ et surtout avec laquelle sont définies les fonctions f et g avec leurs paramètres.

Lorsque la masse résiduelle de combustible passe en dessous d'un seuil prédéterminé, une activation ultime de propulseurs appropriées est provoquée pour éjecter le véhicule spatial hors de son orbite.

Il va de soi que la description qui précède n'a été proposée qu'à titre d'exemple non limitatif et que de nombreuses variantes peuvent être proposées par l'homme de l'art sans sortir du cadre de l'invention.

Ainsi, par exemple, pes propulseurs 2 peuvent être remplacés par des propulseurs à ions ou à photons.

## Revendications

1. Procédé de suivi en continu de la consommation en combustible d'un véhicule spatial (1) équipé d'une pluralité de propulseurs (2) dont la mise en oeuvre est provoquée par des moyens d'activation (3) en fonction d'ordres d'activation qui leur sont appliqués, caractérisé en ce que l'on mémorise, à partir d'un instant de référence, le nombre N d'ordres d'activation appliqués à chacun des propulseurs ainsi que leur durée cumulée S et on en déduit la masse de combustible M consommée depuis l'instant de référence par chaque propulseur par la formule:

$$M = f(N) + g(S)$$

où f et g sont des fonctions prédéterminées indépendantes, et on fait la somme des masses consommées par chaque propulseur.

2. Procédé selon la revendication 1, caractérisé en ce que l'on calcule la masse M par la formule

$$M = \dot{m} \times S + m_o \times N$$

où $\dot{m}$ est un débit moyen de combustible en phase d'activation d'un propulseur donné et $m_o$ est une masse forfaitaire prédéterminée.

3. Procédé selon la revendication 1 ou la revendication 2, caractérisé en ce que l'on définit une succession périodique d'instants de référence et on mémorise à chaque instant de référence pour chaque propulseur le nombre et la durée cumulée des ordres d'activation intervenus depuis l'instant précédent de référence, on calcule la masse de combustible consommée depuis l'instant de référence et on ajoute les masses ainsi calculées successivement.

4. Procédé selon l'une quelconque des revendications 1 à 3, caractérisé en ce que l'on transmet au sol le nombre N et la durée cumulée S des ordres d'activation et on détermine au sol les masses M de combustible consommé.

5. Procédé selon l'une quelconque des revendications 1 à 3, caractérisé en ce que l'on détermine à bord la masse de combustible consommé par les propulseurs et on la transmet au sol.

6. Système de suivi de la consommation en combustible d'un véhicule spatial, adapté à la mise en oeuvre du procédé selon l'une quelconque des revendications 1 à 5, ce véhicule (1) étant équipé d'une pluralité de propulseurs (2) dont la mise en oeuvre est provoquée par des moyens d'activation (3) en fonction d'ordres d'activation qui leur sont appliqués par une unité de commande, caractérisé en ce que cette unité de commande (4) comporte une unité logique (5) dotée d'une zone de mémoire (6) adaptée à stocker le nombre et la durée cumulée d'ordres d'activation à partie d'instants de référence, un étage de puissancce adapté à appliquer les signaux d'activation aux moyens d'activation en fonction de signaux logiques émis par l'unité logique, et une unité (8) adaptée à échantillonner le contenu de la zone de mémoire à chaque instant de référence et à télémétrer au sol un signal représentatif de ce contenu.

7. Système selon la revendication 6, caractérisé en ce que les moyens d'activation sont des vannes électromagnétiques (3) associées chacune à un propulseur.

8. Système selon la revendication 6, caractérisé en ce que les moyens d'activation comportent une vanne pneumatique (11) contrôlant l'alimentation en fluide de propulsion d'un propulseur et une vanne électromagnétique (12), commandée par l'étage de puissance, pour commander l'alimentation en fluide de la vanne pneumatique.

9. Système selon l'une quelconque des revendications 6 à 8, caractérisé en ce qu'aux propulseurs sont associés des capteurs de pression (10) connectés à l'unité logique.

10. Système selon l'une quelconque des revendications 6 à 9, caractérisé en ce qu'aux propulseurs sont associés des capteurs de température (10) connectés à l'unité logique.

**Patentansprüche**

1. Verfahren zur kontinuierlichen Überwachung des Brennstoffverbrauches eines Raumfahrzeuges (1), das mit einer Vielzahl von Antrieben (2) ausgestattet ist, deren Inbetriebnahme durch Aktivierungsmittel (3) gemäß diesen auferlegten Aktivierungsanordnungen veranlaßt wird, dadurch gekennzeichnet, daß von einem Bezugszeitpunkt an die Anzahl N der einem jeden Antrieb auferlegten Aktivierungsanordnungen sowie deren zusammengefaßte Zeitdauer S gespeichert werden und die vom Bezugszeitpunkt an von jedem Antrieb verbrauchte Brennstoffmasse M aus der folgenden Formel abgeleitet wird:

$$M = f(N) + g(S)$$

wobei f und g vorbestimmte, voneinander unabhängige Funktionen sind, und daß die Summe der von jedem Antrieb verbrauchten Massen gebildet wird.

2. Verfahren nach Anspruch 1, dadurch gekennzeichnet, daß die Masse M durch die Formel

$$M = m \times S + m_o \times N$$

berechnet wird, wobei m ein mittlerer Brennstoffausstoß in der Aktivierungsphase eines gegebenen Antriebs ist und $m_o$ eine vorbestimmte Pauschalmasse.

3. Verfahren nach Anspruch 1 oder 2, dadurch gekennzeichnet, daß eine periodische Aufeinanderfolge von Bezugszeitpunkten festgelegt und bei jedem Bezugszeitpunkt für jeden Antrieb die Zahl und die zusammengefaßte Dauer der vom vorhergehenden Bezugszeitpunkt an eingegangenen Aktivierungsanordnungen gespeichert wird, daß die vom Bezugszeitpunkt an verbrauchte Brennstoffmasse berechnet wird und daß die auf diese Weise berechneten Massen nacheinander hinzugefügt werden.

4. Verfahren nach einem der Ansprüche 1 bis 3, dadurch gekennzeichnet, daß die Anzahl N und die zusammengefaßte Dauer S der Aktivierungsanordnungen zur Erde übermittelt werden und daß auf der Erde die Massen M des verbrauchten Brennstoffes bestimmt werden.

5. Verfahren nach einem der Ansprüche 1 bis 3, dadurch gekennzeichnet, daß die von den Antrieben verbrauchte Brennstoffmasse an Bord bestimmt und zur Erde übermittelt wird.

6. System zur Überwachung des Brennstoffverbrauches eines Raumfahrzeuges zur Durchführung des Verfahrens nach einem der Ansprüche 1 bis 5, wobei dieses Fahrzeug (1) mit einer Vielzahl von Antrieben (2) ausgestattet ist, deren Inbetriebnahme durch Aktivierungsmittel (3) gemäß diesen durch eine Steuereinheit auferlegten Aktivierungsanordnungen veranlaßt wird, dadurch gekennzeichnet, daß die Steuereinheit (4) eine Logikeinheit (5) umfaßt, die mit einem Speicherbereich (6) zum Speichern der Anzahl und der zusammengefaßten Dauer der Aktivierungsanordnungen von Bezugszeitpunkten an ausgestattet ist, eine Leistungsstufe zur Abgabe der Aktivierungssignale an Aktivierungsmittel gemäß von der Logikeinheit ausgegebenen Logiksignalen, und eine Einheit (8) zur Entnahme des Inhalts des Speicherbereichs bei jedem Bezugszeitpunkt und zur Fernübermittlung eines für diesen Inhalt repräsentativen Signals zur Erde.

7. System nach Anspruch 6, dadurch gekennzeichnet, daß die Aktivierungsmittel elektromagnetische Ventile (3) sind, die jeweils einem Antrieb zugeordnet sind.

8. System nach Anspruch 6, dadurch gekennzeichnet, daß die Aktivierungsmittel ein pneumatisches Ventil (11) umfassen, welches die Versorgung eines Antriebs mit Antriebsfluid steuert, sowie ein durch die Leistungsstufe gesteuertes elektromagnetisches Ventil (12) zur Steuerung der Fluidversorgung des pneumatischen Ventils.

9. System nach einem der Ansprüche 6 bis 8, dadurch gekennzeichnet, daß den Antrieben Druckfühler (10) zugeordnet sind, welche mit der Logikeinheit verbunden sind.

10. System nach einem der Ansprüche 6 bis 9, dadurch gekennzeichnet, daß den Antrieben Temperaturfühler (10) zugeordnet sind, die mit der Logikeinheit verbunden sind.

**Claims**

1. Method for monitoring continuously the propellant consumption of a space vehicle (1) equipped with a plurality of propulsion units (2) whose operation is activated by activation means (3) depending on activation instructions which are applied to them, characterized in that, from a reference time, the number N of activation instructions applied to each of the propulsion units as well as their cumulative duration S are memorized and the mass of propellant M consumed since the reference time by each propulsion unit is deduced therefrom through the formula:

$$M=f(N)+g(S)$$

where f and g are independent predetermined functions, and the masses consumed by each propulsion unit are summed.

2. Method according to Claim 1, characterized in that the mass M is computed through the formula

$$M+\dot{m}\times S+m_o\times N$$

where m is an average propellant flowrate during the activation phase of a given propulsion unit and $m_o$ is a predetermined fixed mass.

3. Method according to Claim 1 or Claim 2, characterized in that a periodic succession of reference times is defined and at each reference time for each propulsion unit the number and the cumulative duration of the activation instructions since the previous reference time are memorized, the mass of propellant consumed since the reference time is computed and the masses thus successively computed are added up.

4. Method according to any one of Claims 1 to 3, characterized in that the number N and cumulative duration S of the activation instructions are transmitted to the ground and the masses M of propellant consumed are determined on the ground.

5. Method according to any one of Claims 1 to 3, characterized in that the mass of propellant consumed by the propulsion units is determined on board and is transmitted to the ground.

6. System for monitoring the propellant consumption of a space vehicle, suited to the operation of the method according to any one of Claims 1 to 5, this vehicle (1) being equipped with a plurality of propulsion units (2) whose operation is activated by activation means (3) depending on activation instructions which are applied to them by a control unit, characterized in that this control unit (4) comprises a logic unit (5) provided with a memory zone (6) suited to storing the number and the cumulative duration of activation instructions from reference times, a power stage suited to applying the activation signals to the activation means depending on logic signals emitted by the logic unit, and a unit (8) suited to sampling the contents of the memory zone at each reference time and to telemetering the signal representing these contents to the ground.

7. System according to Claim 6, characterized in that the activation means are electromagnetic valves (3), each associated with a propulsion unit.

8. System according to Claim 6, characterized in that the activation means comprises a pneumatic valve (11) controlling the propulsion fluid supply of a propulsion unit and an electromagnetic valve (12) controlled by the power stage, to control the fluid supply of the pneumatic valve.

9. System according to any one of Claims 6 to 8, characterized in that pressure sensors (10) connected to the logic unit are associated with the propulsion units.

10. System according to any one of Claims 6 to 9, characterized in that temperature sensors (10) connected to the logic unit are associated with the propulsion units.

FIG.1

FIG.2

FIG.4

FIG.3